# EUROPÄISCHE PATENTSCHRIFT

(11) **EP 2 467 705 B1**
(45) Veröffentlichungstag und Bekanntmachung des Hinweises auf die Patenterteilung: **03.12.2014**
(21) Anmeldenummer: 10712323.4
(22) Anmeldetag: 11.03.2010
(51) Int. Cl.: G01N 25/68

(54) **VORRICHTUNG UND VERFAHREN ZUM BESTIMMEN DES TAUPUNKTES EINES GASES**
DEVICE AND METHOD FOR DETERMINING THE DEW POINT OF A GAS
DISPOSITIF ET PROCÉDÉ POUR LA DÉTERMINATION DU POINT DE ROSÉE D'UN GAZ

(43) Veröffentlichungstag der Anmeldung: 27.06.2012
(73) Patentinhaber: BARTEC BENKE GmbH, 21465 Reinbek/Hamburg (DE)
(72) Erfinder: BÖHM, Alfred, 94234 Viechtach (DE); SCHRAMEL, Marco, 94560 Offenberg (DE)
(74) Vertreter: Kohl, Karl-Heinz
(86) Internationale Anmeldenummer: PCT/EP2010/001554
(87) Internationale Veröffentlichungsnummer: WO 2011/110197

(56) Entgegenhaltungen:
- WO-A1-2007/042168
- DE-A1- 2 634 274
- DE-T2- 69 313 507

## Beschreibung

Die Erfindung betrifft eine Vorrichtung zum Bestimmen des Taupunktes eines Gases in einem Prozessraum. Hierbei ist ein thermisch hochleitfähiger Körper vorgesehen, der mit einem ersten Abschnitt in dem Prozessraum vorgesehen ist. Ein zweiter Abschnitt des thermisch hochleitfähigen Körpers ist außerhalb des Prozessraums vorgesehen.

Ferner betrifft die Erfindung ein Verfahren zum Bestimmen des Taupunkts eines Gases in einem Prozessraum.

Gattungsgemäße Vorrichtungen werden auch als Taupunktsensor oder Kondensationstemperatursensor bezeichnet. Aus der WO 2007/042168 A1 ist beispielsweise ein derartiger Sensor bekannt. Dieser weist als thermisch hochleitfähigen Körper ein Wärmerohr auf, welches auch als Heatpipe bezeichnet wird.

Wärmerohre sind Wärmeüberträger, die beispielsweise unter der Nutzung von Verdampfungswärme eines Stoffes eine hohe Wärmestromdichte erreichen. Dies bedeutet, dass auf kleinen Querschnittsflächen große Mengen an Wärme transportiert werden können. Wärmerohre bestehen beispiels-weise aus einem hermetisch abgeschlossenen Rohr, in das ein Arbeitsmedium gefüllt ist. Dieses Arbeitsmedium befindet sich zum geringeren Teil im flüssigen, zu einem größeren Teil im dampfförmigen Zustand. Das Wärmerohr wird derart platziert, dass es auf der einen Seite in oder an einem warmen Bereich und auf der anderen Seite in oder an einem kühlen Bereich vorgesehen ist. Der warme Bereich ist zu kühlen. Im Inneren des Wärmerohres beginnt das Arbeitsmedium im warmen Bereich zu verdampfen. Hierdurch wird der Druck im Dampfraum lokal erhöht, was zu einem geringen Druckunterschied innerhalb des Wärmerohres führt. Daher strömt der entstandene Dampf in Richtung des kalten Bereichs des Wärmerohres. Hier kondensiert er. Dabei wird die zuvor aufgenommene Wärme wieder abgegeben. Das nun wieder verflüssigte Arbeitsmedium kehrt dann beispielsweise durch Schwerkraft oder durch Kapillarkräfte wieder zur warmen Seite des Wärmerohres zurück. Das Wärmerohr besitzt aufgrund seiner Konstruktion einen sehr geringen Wärmewiderstand.

Gemäß der Lehre der WO 2007/042168 A1 soll ein Teil des Wärmerohres im Prozessraum platziert sein, wohingegen ein anderer Teil außerhalb des Prozessraums vorgesehen ist. Im Betrieb wird durch die oben beschriebene Funktion des Wärmerohres der Bereich des Wärmerohres im Prozessraum selbsttätig gekühlt. Hierdurch soll eine Kondensation des Gases, welches im Prozessraum vorhanden ist, in diesem Bereich des Wärmerohres stattfinden. Ferner wird angenommen, dass die Temperatur an dem Wärmerohr über die gesamte Länge des Wärmerohres konstant ist und daher lediglich ein Temperatursensor benötigt wird, um die Temperatur zu messen.

Es hat sich allerdings herausgestellt, dass die Annahme, dass die Temperatur über das Wärmerohr beziehungsweise die Heatpipe konstant ist, nur unter bestimmten Bedingungen stimmt. Daher können bei diesem System leicht Messfehler entstehen. Ein weiteres Problem dieses Systems ist, dass es zu einer Übersättigung des Bereiches des Wärmerohres, welche im Prozessraum vorgesehen ist und auch als Kondensationsstelle bezeichnet wird, kommen kann. Dies geschieht dadurch, dass über die Heatpipe die Kondensationsstelle unter Umständen weiter abgekühlt wird als der Taupunkt bzw. Kondensationspunkt. Hierdurch entsteht eine Übersättigung. In diesem Fall wird ein Taupunkt bestimmt, der zu niedrig liegt.

Ein anderer Aufbau ist aus der DE 693 13 507 T2 bekannt. Hierbei ist ein wärmeleitfähiges Metallrohr mit einer Seite in einem Prozessraum vorgesehen, und mit der anderen Seite außerhalb des Prozessraumes. Das wärmeleitfähige Metallrohr wird auf der Seite außerhalb des Prozessraumes aktiv gekühlt. Ferner sind drei Temperatursensoren vorgesehen, die sich im Prozessraum, an der Kondensatiansstelle des wärmeleitfähigen Metallrohres und auf der Rückseite des wärmeleitfähigen Metallrohres befinden. Beim aktiven Kühlen des Metallrohrs entsteht eine Kondensation auf den Bereichen des Metallrohrs, welche sich in dem Prozessraum befinden. Um den Taupunkt zu bestimmen, ist es notwendig, die von den Temperatursensoren ermittelten Daten für eine Korrekturrechnung einem Mikroprozessor zuzuführen. Hierbei wird die Genauigkeit des Systems durch die der Korrekturrechnung zu Grunde liegenden Daten maßgeblich beeinflusst.

Des Weiteren ist aus der CH 438 784 eine weitere Vorrichtung zum Bestimmen der Kondensationstemperatur bekannt. Hierbei ist ein Messkörper über eine Verbindungsbrücke mit einem Peltierelement verbunden. Diese Verbindungsbrücke ist schlecht wärmeleitend ausgeführt. Ferner sind an dem Peltierelement und an dem Messkörper Thermoelemente vorgesehen. Das Peltierelement wird derart betrieben, dass der Messkörper gekühlt wird. Über den Temperaturunterschied der Temperaturen, welche durch die Thermoelemente ermittelt werden, kann die Taupunkttemperatur bestimmt werden. Zum einen kann diese Vorrichtung nicht ohne Weiteres an exponierten Stellen platziert werden. Zum anderen wird durch den Dauerbetrieb und die vorgesehene schlecht wärmeleitende Schicht das Peltierelement äußerst stark beansprucht. Das Peltierelement ist auch in seiner Temperaturbelastbarkeit grundsätzlich begrenzt, so dass ein dauerhafter Einsatz dieses Systems problematisch ist.

Ein weiteres System zum Ermitteln der Kondensationstemperatur ist aus GB 2 207 514 A bekannt. Auch hier ist eine aktive Kühlung vorgesehen, die über die eine Fläche im Prozessraum abgekühlt wird. Über die an dieser Fläche ermittelten Temperaturen kann die Kondensationstemperatur bzw. der Taupunkt bestimmt werden.

In der EP 0 276 953 A2 ist ein anderer Taupunktsensor beschrieben. Dieser fungiert nach einem optischen Messprinzip, bei dem die Abnahme einer Lichtintensität ausgewertet wird. In diesem Sensor ist eine Heatpipe verwendet, welche sich von innerhalb eines Prozessraumes nach außerhalb erstreckt. Der wesentliche Teil des Sensors ist hierbei innerhalb des Prozessraumes vorgesehen, insbesondere auch die Elektronik sowie ein Peltierelement zum Kühlen. Außerhalb des Prozessraumes ist ein Teil der Heatpipe und ein Kühlkörper angeordnet. Da sich bei diesem Sensor die Auswertungselektronik sowie weitere elektronische Bauteile innerhalb des Prozessraumes befinden, muss der Aufbau möglichst stabil und umweltbeständig ausgeführt sein. Dies erhöht die Produktionskosten einer derartigen Vorrichtung. Außerdem wird in dem Prozessraum durch die Vorrichtung Platz beansprucht.

Der Erfindung liegt die Aufgabe zu Grunde, eine Vorrichtung und ein Verfahren anzugeben, wodurch die Taupunkttemperatur eines Gases in einem Prozessraum effektiv und zuverlässig bestimmt werden kann.

Die Aufgabe wird erfindungsgemäß durch eine Vorrichtung mit den Merkmalen des Anspruchs 1 sowie ein Verfahren mit den Merkmalen des Anspruchs 10 gelöst.

Weitere vorteilhafte Ausführungen sind in den abhängigen Ansprüchen, der Beschreibung sowie in den Figuren und deren Beschreibung angegeben.

Gemäß dem Anspruch 1 ist eine gattungsgemäße Vorrichtung dadurch weitergebildet, dass im Bereich des zweiten Abschnitts des thermisch hochleitfähigen Körpers eine Einrichtung zum aktiven Temperieren in wärmeleitendem Kontakt mit dem thermisch hochleitfähigen Körper vorgesehen ist und dass im Bereich des ersten Abschnitts des thermisch hochleitfähigen Körpers ein erster Temperatursensor zum Messen der Temperatur des thermisch hochleitfähigen Körpers vorgesehen ist. Ferner ist im Bereich des zweiten Abschnitts des thermisch hochleitfähigen Körpers ein zweiter Temperatursensor zum Messen der Temperatur des thermisch hochleitfähigen Körpers vorgesehen. Die Einrichtung zum aktiven Temperieren ist derart ausgelegt, dass ein Erwärmen und Abkühlen des thermisch hochleitfähigen Körpers über die Einrichtung möglich ist. Der thermisch hochleitfähige Körper kann als Wärmerohr oder Heatpipe ausgeführt sein.

Der Erfindung liegt die Erkenntnis zu Grunde, dass es für ein zuverlässiges Bestimmen des Taupunktes nicht ausreichend ist, den thermisch hochleitfähigen Körper zu kühlen, so dass am ersten Abschnitt des Körpers ein Kondensationsbereich in dem Prozessraum entsteht. Die Systeme des Standes der Technik haben oft den Nachteil, dass es durch das ledigliche Vorsehen einer Kühlung des thermisch hochleitfähigen Körpers leicht zu einer Übersättigung des Kondensationsbereiches kommen kann. Ein Grundgedanke der Erfindung kann daher darin gesehen werden, eine aktive Temperierung des thermisch hochleitfähigen Körpers vorzusehen. Mit einer aktiven Temperierung im Sinne der Erfindung ist die Möglichkeit zu verstehen, den thermisch hochleitfähigen Körper aktiv zu erwärmen wie auch zu kühlen. Dies wird entsprechend der Erfindung durch eine Einrichtung zum aktiven Temperieren erreicht. Hierdurch ist es möglich, abhängig von der exakten Temperatur des Taupunktes des zu untersuchenden Gases den thermisch hochleitfähigen Körper zu kühlen oder zu erwärmen, so dass eine Übersättigung des Kondensationsbereiches, wie Teil des ersten Abschnittes des thermisch hochleitfähigen Körpers auch bezeichnet werden können, größtenteils vermieden wird.

Ein weiterer Grundgedanke der Erfindung ist auf der Erkenntnis aufgebaut, dass die theoretische Annahme, dass entlang eines thermisch hochleitfähigen Körpers, insbesondere eines Wärmerohres, eine konstante Temperatur besteht, nicht immer stimmt. Ob eine konstante Temperatur über den gesamten thermisch hochleitfähigen Körper vorhanden ist, ist abhängig von den exakten Umgebungsvariablen, insbesondere der Temperatur im Prozessraum und der Temperatur außerhalb des Prozessraums. Daher ist bei der Erfindung der erste Temperatursensor im Bereich des ersten Abschnittes des thermisch hochleitfähigen Körpers, also im Prozessraum, und der zweite Temperatursensor im Bereich des zweiten Abschnittes des thermisch hochleitfähigen Körpers, also außerhalb des Prozessraumes, vorgesehen.

In einer vorteilhaften Ausgestaltung ist der zweite Temperatursensor im Bereich zwischen der Einrichtung zum aktiven Temperieren und dem thermisch hochleitfähigen Körper angeordnet. Der zweite Temperatursensor kann auch an einer anderen Stelle platziert sein, an der er einen thermischen Kontakt mit der Einrichtung zum aktiven Temperieren und dem thermisch hochleitfähigen Körper hat. Hierdurch ist es möglich, die durch den zweiten Temperatursensor ermittelte Temperatur zum Steuern der Einrichtung zum aktiven Temperieren zu verwenden. Hierbei ist es bevorzugt, wenn der zweite Temperatursensor beispielsweise in eine Wärmeleitpaste eingebettet ist, welche einen hochwärmeleitenden Kontakt zwischen dem thermisch hochleitfähigen Körper und der Einrichtung zum aktiven Temperieren herstellt.

Vorteilhaft ist es ferner, wenn eine Steuer- und Auswerteeinrichtung zum Vergleichen der Temperaturverläufe der durch den ersten und zweiten Temperatursensor gemessenen Temperaturen und zum Bestimmen der Taupunkttemperatur anhand von Unstetigkeiten in einem und/oder beiden Verläufen vorgesehen ist. So ist es beispielsweise möglich, beim Abkühlen des thermisch hochleitfähigen Körpers am ersten Temperatursensor Veränderungen des Gradienten des Temperaturverlaufes festzustellen, mit dem die Temperatur sinkt. Hierdurch kann auf einen Beginn der Betauung des ersten Abschnittes des thermisch hochleitfähigen Körpers geschlossen werden.

Die Steuer- und Auswerteeinrichtung ist bevorzugt zum zyklischen und/oder regelmäßigen Erwärmen und Abkühlen des thermisch hochleitfähigen Körpers ausgebildet. Durch ein zyklisches und/oder regelmäßiges Erwärmen des thermisch hochleitfähigen Körpers kann verhindert werden, dass es zu einer Übersättigung des Kondensationsbereiches kommt. Ein anschließendes erneutes Abkühlen nach dem Erwärmen kann beispielsweise zum Verifizieren der ermittelten Taupunkttemperatur dienen. Im Sinne der Erfindung kann unter zyklisch und/oder regelmäßig verstanden werden, dass das Erwärmen und Abkühlen beispielsweise im Bereich von drei Minuten wiederholt wird. Ebenso kann ein erneutes Erwärmen und Abkühlen dann ausgeführt werden, wenn große unerwartete Temperatursprünge am ersten Temperatursensor festgestellt werden, woraus auf eine Veränderung der Temperatur im Prozessraum geschlossen werden kann.

Grundsätzlich kann die Einrichtung zum aktiven Temperieren beliebig ausgeführt sein, so lang es über sie möglich ist, den thermisch hochleitfähigen Körper zu erwärmen und abzukühlen. Hierbei kann die Einrichtung zum aktiven Temperieren auch zweigeteilt in eine Erwärmungseinrichtung und eine Abkühlungseinrichtung aufgeteilt sein. Die Erwärmungseinrichtung kann beispielsweise als Widerstandsheizung ausgeführt sein. Besonders effektiv lässt sich die Einrichtung zum aktiven Temperieren durch ein Peltierelement ausführen.

Weist die Einrichtung zum aktiven Temperieren einen Kühlkörper auf, so ist es möglich, eine leistungsstarke Einrichtung zum aktiven Temperieren einzusetzen. Hierdurch kann die Einrichtung zum aktiven Temperieren, beispielsweise ein Peltierelement, schnell thermische Energie dem thermisch hochleitfähigen Körper zu- oder abführen.

Vorteilhaft ist es, wenn zumindest im Teilbereich des ersten Abschnitts des thermisch hochleitfähigen Körpers, welcher sich im Prozessraum befindet, ein Überrohr vorgesehen ist. In einem Prozessraum können unterschiedliche Gase von Wasserdampf bis zu Dämpfen vorgesehen sein, die ein hohes Korrosionspotenzial aufweisen. Daher hat es sich als vorteilhaft herausgestellt, zumindest Teilbereiche des ersten Abschnitts des thermisch hochleitfähigen Körpers mit einem Überrohr zu versehen. Hierbei ist es bevorzugt, wenn das Überrohr in gut leitendem thermischem Kontakt zu dem thermisch hochleitfähigen Körper angebracht ist. Das Überrohr kann beispielsweise vernickelt sein, so dass es eine geringe Korrosionsanfälligkeit aufweist. Wenn ein Überrohr eingesetzt wird, kann der erste Temperatursensor zwischen dem Überrohr und dem thermisch hochleitfähigen Körper vorgesehen sein. Hierdurch ist eine einfache und sichere Platzierung des ersten Temperatursensors möglich. Außerdem wird so eine zuverlässige Messung der Temperatur durch diesen Temperatursensor erreicht.

Bevorzugt ist es, wenn im Prozessraum um den thermisch hochleitfähigen Körper oder um den thermisch hochleitfähigen Körper mit Überrohr ein Schutzrohr vorgesehen ist. In einer weiteren Ausbildung kann an dem Schutzrohr an einem offenen Ende ein Filter vorgesehen sein. Durch die Verwendung des Schutzrohres um den thermisch hochleitfähigen Körper beziehungsweise um den thermisch hochleitfähigen Körper mit Überrohr werden Psychrometriereffekte verringert beziehungsweise vermieden. Diese Effekte entstehen, wenn in dem Prozessraum durch Erhitzungseinrichtungen oder andere Einflüsse ein Luftstrom vorhanden ist. Dieser Luftstrom würde den thermisch hochleitfähigen Körper im Prozessraum bzw. das Überrohr zusätzlich kühlen und die dort stattfindende Kondensation beeinflussen. Durch das Schutzrohr wird der Gasbereich um den thermisch hochleitfähigen Körper beruhigt, so dass kaum oder nur eine geringe Strömung vorhanden ist. Wird zusätzlich ein Filter an einem offenen Ende des Schutzrohres vorgesehen, so wird zum einen die Beruhigung der Luft verbessert, zum anderen wird verhindert, dass sich Partikel, welche innerhalb des Prozessraumes vorhanden sind, auf dem thermisch hochleitfähigen Körper oder dem Überrohr ablagern können. Diese Partikel, welche zum Beispiel Schmutzpartikel sein können, könnten die Messung der Temperaturen und Bestimmung des Taupunktes beeinflussen.

Ferner ist es bevorzugt, wenn der thermisch hochleitfähige Körper durch eine Wandung hindurchragt, die den Prozessraum begrenzt. In diesem Fall kann das Überrohr ebenfalls mit der Wandung abschließen, so dass der thermisch hochleitfähige Körper keinen direkten Kontakt zu dem Prozessraum und den darin enthaltenen Gasen aufweist. In ähnlicher Weise kann das Schutzrohr ausgebildet sein, so dass die Gase nur durch eine definierte Öffnung des Schutzrohres zu dem thermisch hochleitfähigen Körper bzw. dem Überrohr gelangen können.

Bei dem erfindungsgemäßen Verfahren zum Bestimmen eines Taupunktes eines Gases in einem Prozessraum wird mittels einer Einrichtung zum aktiven Temperieren ein sich durch eine Wandung erstreckender thermisch hochleitfähiger Körper erwärmt und abgekühlt. Dieser thermisch hochleitfähige Körper kann als Wärmerohr oder Heatpipe ausgeführt sein. Die Wandung wiederum begrenzt den Prozessraum. Ferner wird über einen ersten Temperatursensor eine erste Temperatur des thermisch hochleitfähigen Körpers im Prozessraum ermittelt und über einen zweiten Temperatursensor eine zweite Temperatur des thermisch hochleitfähigen Körpers im Bereich der Einrichtung zur aktiven Temperierung ermittelt. Außerdem findet eine Auswertung der Temperaturverläufe der durch den ersten und/oder den zweiten Temperatursensor ermittelten Temperatur statt, über die die Taupunkttemperatur bestimmt wird.

Ein grundlegender Gedanke des erfindungsgemäßen Verfahrens ist es, dass es nicht ausreichend ist, den thermisch hochleitfähigen Körper lediglich abzukühlen, so dass auf dem Bereich oder Abschnitt des thermisch hochleitfähigen Körpers, welcher sich im Prozessraum befindet, eine Kondensation stattfindet. Insbesondere beim Verwenden eines Wärmerohres oder einer Heatpipe kann durch die Wärmepumpeneffekte abhängig von den Temperaturen im Prozessraum und außerhalb des Prozessraums der Abschnitt des Wärmerohres, welcher sich innerhalb des Prozessraums befindet, derart stark abgekühlt werden, dass es zu einer Übersättigung kommt. In diesem Fall ist ein zuverlässiges Bestimmen des Taupunktes nicht mehr möglich. Es ist im erfindungsgemäßen Verfahren vorgesehen, den thermisch hochleitfähigen Körper auch erwärmen zu können, um so einer starken Abkühlung entgegenzuwirken. Hierdurch kann auch die gewünschte Temperatur des thermisch hochleitfähigen Körpers auf beiden Seiten der Wandung eingestellt werden.

Zum Bestimmen des Taupunktes werden in einem Schritt A während des Abkühlens Unstetigkeiten im Temperaturverlauf der durch den ersten und/oder den zweiten Temperatursensor ermittelten Temperaturen zum Bestimmen der Taupunkttemperatur ausgewertet. Es hat sich herausgestellt, dass beim Abkühlen des thermisch hochleitfähigen Körpers beim Eintritt der Kondensation im ersten Abschnitt Veränderungen im Temperaturverlauf auftreten. Hierbei kann es sich beispielsweise um eine Veränderung des Gradienten der Kurve des Temperaturverlaufes, oder um Unstetigkeiten, wie beispielsweise kleine Temperatursprünge, handeln.

In Verbindung mit der vom zweiten Temperatursensor ermittelten Temperatur, welche der Temperatur entspricht, die durch die Einrichtung zur aktiven Temperierung an den thermisch hochleitfähigen Körper angelegt wird, ist es möglich, derartige Schwankungen festzustellen.

Unter Unstetigkeiten im Sinne der Erfindung können sowohl Unstetigkeiten im mathematischen Sinne wie auch allgemeine Unregelmäßigkeiten in einem konstanten Verlauf verstanden werden.

In einem Schritt B wird der thermisch hochleitfähige Körper über die zu erwartende Taupunkttemperatur erwärmt. Durch ein Erwärmen des thermisch hochleitfähigen Körpers über die Taupunkttemperatur, insbesondere des ersten Abschnitts des thermisch hochleitfähigen Körpers, wird erreicht, dass sich Kondensat, welches sich auf dem thermisch hochleitfähigen Körper abgelagert hat, verdampft wird beziehungsweise verdunstet, und der thermisch hochleitfähige Körper somit trockengelegt wird. Hierdurch wird verhindert, dass eine Messung gestartet wird, welche zu fehlerhaften Ergebnissen führt, da eine Übersättigung vorhanden ist.

Des Weiteren ist es bevorzugt, dass in einem Schritt C nach dem Bestimmen der Taupunkttemperatur die Einrichtung zum aktiven Temperieren geregelt wird, um beim zweiten Temperatursensor eine Temperatur zu erhalten, welche sich im Bereich des Taupunktes befindet. Hierbei kann sich die Temperatur insbesondere um ± 15°C von dem Taupunkt unterscheiden. So wird erreicht, dass es zu keinem zu starken Abkühlen oder Erhitzen des thermisch hochleitfähigen Körpers im Prozessraum kommen kann. Ferner kann durch Aufrechterhaltung dieses Temperaturbereiches der erste Abschnitt des thermisch hochleitfähigen Körpers auf der Taupunkttemperatur gehalten werden, welche sich durch die bei der Kondensation freiwerdende Energie und die Wärmepumpeneffekte des thermisch hochleitfähigen Körpers oder des Wärmerohres im Wesentlichen selbständig aufrecht erhält. Hierdurch kann auch eine Veränderung des Taupunktes erkannt werden.

In einer bevorzugten Ausführungsform werden zyklisch, regelmäßig oder bei Bedarf die Schritte B, A, C in dieser Reihenfolge erneut ausgeführt. Hierdurch wird der Taupunkt neu bestimmt, dies bedeutet, dass die auf dem ersten Abschnitt des thermisch hochleitfähigen Körpers kondensierte Flüssigkeit verdampft wird und ein neuer Messzyklus durch anschließendes Abkühlen gestartet wird. Durch das erneute Ermitteln des Taupunktes können auch Änderungen sicher erkannt werden. Außerdem wird dem Phänomen des Übersättigens entgegengewirkt. Zyklisch, bei Bedarf oder regelmäßig im Sinne der Erfindung kann darin verstanden werden, dass beispielsweise alle 3 oder 5 Minuten die Schritte B, A, C erneut ausgeführt werden. Ebenso kann darunter verstanden werden, insbesondere unter "bei Bedarf" oder "regelmäßig", dass das Neuausführen der Schritte auch durch einen Benutzer manuell angestoßen werden kann beziehungsweise einer bestimmten Regel folgt. In ähnlicher Weise können beim Erkennen einer starken Temperaturschwankung im Prozessraum beispielsweise über den ersten Temperatursensor selbständig durch eine Steuerung die Verfahrensschritte neu ausgeführt werden.

Bei einem erneuten Ausführen des Schrittes B ist es bevorzugt, dass der thermisch hochleitfähige Körper geringer erwärmt wird als beim erstmaligen Ausführen des Schrittes B. Ferner ist es vorteilhaft, wenn ein Trockenlegen des thermisch hochleitfähigen Körpers im Prozessraum durch Unstetigkeiten im Temperaturverlauf, der durch den ersten und/oder zweiten Temperatursensor ermittelten Temperaturen festgestellt wird, und dass nach dem Feststellen des Trockenlegens des thermisch hochleitfähigen Körpers das Erwärmen beendet wird. Beim ersten Ausführen des Schrittes B ist die Lage des Taupunktes unbekannt. Daher wird vorsorglich der thermisch hochleitfähige Körper stark erwärmt, so dass er zum einen sicher trockengelegt ist und zum anderen im Verlauf der Temperaturgradienten Unstetigkeiten zum Bestimmen des Taupunktes beim anschließenden Abkühlen deutlich sind. Beim erneuten Ausführen des Schrittes B ist meist der Taupunkt bereits bekannt, so dass es ausreichend ist, den thermisch hochleitfähigen Körper derart zu erwärmen, dass er trockengelegt ist. Dies ist abhängig von der Taupunkttemperatur. Durch ein weniger starkes Erwärmen des thermisch hochleitfähigen Körpers im Schritt B ist es ebenfalls möglich, beim Abkühlen schneller zu Ergebnissen zu kommen, und so die Bestimmung des Taupunktes zu beschleunigen.

Die Erfindung wird nachfolgend anhand von Ausführungsbeispielen und schematischen Zeichnungen näher erläutern. In diesen Zeichnungen zeigen:
- Fig. 1: eine schematische Darstellung einer erfindungsgemäßen Vorrichtung zum Bestimmen des Taupunktes eines Gases in einem Prozessraum;
- Fig. 2: eine schematische Darstellung einer erfindungsgemäßen Vorrichtung zum Bestimmen des Taupunktes eines Gases in einem Prozessraum mit einem Schutzrohr;
- Fig. 3: eine schematische Darstellung einer weiteren erfindungsgemäßen Vorrichtung zum Bestimmen des Taupunktes eines Gases in einem Prozessraum;
- Fig. 4: eine Frontansicht auf einen zweiten Abschnitt einer erfindungsgemäßen Vorrichtung zum Bestimmen des Taupunktes eines Gases in einem Prozessraum;
- Fig. 5: ein Diagramm über den Temperaturverlauf der mit einem ersten und einem zweiten Temperatursensor ermittelten Temperaturen; und
- Fig. 6: ein Diagramm über den Temperaturverlauf der mit einem ersten und einem zweiten Temperatursensor ermittelten Temperaturen.

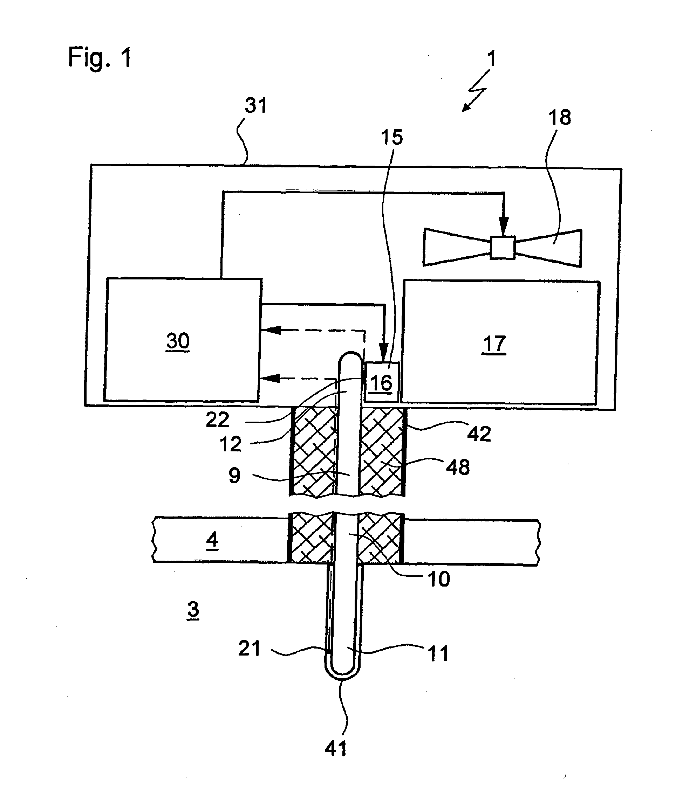

In Fig. 1 ist eine erfindungsgemäße Vorrichtung zum Bestimmen des Taupunktes eines Gases in einem Prozessraum 3 dargestellt, welche auch als Taupunktsensor 1 oder als Kondensationssensor bezeichnet werden kann.

Der Taupunktsensor 1 befindet sich mit einem Teilbereich in einem Prozessraum 3. Ein anderer Teilbereich befindet sich auf der anderen Seite einer Wandung 4, die den Prozessraum 3 abschließt. In dem Prozessraum 3 befindet sich ein Gas mit einem Feuchtigkeitsgehalt. Über das Bestimmen des Taupunktes dieses Gases kann der Feuchtigkeitsgehalt bestimmt werden.

Es wird angenommen, dass im Prozessraum 3 eine höhere Temperatur vorhanden ist als außerhalb des Prozessraumes 3. Grundsätzlich können die beschriebenen Verfahren und die beschriebene Vorrichtung allerdings auch angewendet werden, wenn in dem Prozessraum 3 eine geringere Temperatur vorhanden ist, als die Temperatur auf Seite des Prozessraumes 3.

Das zentrale Element des Taupunktsensors 1 ist ein thermisch hochleitfähiger Körper 9, der in diesem Ausführungsbeispiel als Wärmerohr 10, welches auch als Heatpipe bezeichnet wird, ausgeführt ist. Die Heatpipe 10 reicht mit einem ersten Abschnitt 11 in den Prozessraum 3 hinein. Ein zweiter Abschnitt 12 der Heatpipe 10 befindet sich außerhalb des Prozessraums 3. Der Teilbereich der Heatpipe 10, welcher in den Prozessraum 3 hineinragt, ist mit einem Überrohr 41 versehen. Dieses Überrehr 41 ist beispielsweise mit Nickel überzogen und dient zum Erhöhen der Korrosionsbeständigkeit der Teile des Taupunktsensors 1, welche sich in dem Prozessraum 3 befinden.

Das Überrohr 41 ist hermetisch um den ersten Abschnitt 11 der Heatpipe 10 herum abgeschlossen, so dass die Heatpipe 10 keinen direkten Kontakt mit den Prozessgasen innerhalb des Prozessraumes 3 besitzt.

Das Überrohr 41 ist in gut wärmeleitendem Kontakt mit der Heatpipe 10 platziert. Zwischen der Heatpipe 10 und dem Überrohr 41 ist ein erster Temperatursensor 21 angebracht. Am Ende des zweiten Abschnitts 12 der Heatpipe 10 befindet sich eine Einrichtung zum aktiven Temperieren 15, welche als Peltierelement 16 ausgeführt ist. Dieses Peltierelement 16 befindet sich in gut leitendem Kontakt zu der Heatpipe 10. Zwischen der Heatpipe 10 und dem Peltierelement 16 ist ein zweiter Temperatursensor 22 angebracht.

Des Weiteren befindet sich ebenfalls in gut thermisch leitendem Kontakt an dem Peltierelement 16 ein Kühlkörper, der auch als Kühlblock 17 bezeichnet werden kann. Dieser dient zum Abführen von Wärme beziehungsweise entstehender Kälte. Ein Peltierelement 16 erzeugt auf einer Seite eine hohe Temperatur und auf der anderen Seite eine geringe Temperatur. Je nach Ansteuerung des Peltierelements 16 kann die Heatpipe 10 erwärmt oder abgekühlt werden. Um die auf der Rückseite des Peltierelements 16 entstehende Wärme oder Kälte besser abzuführen, ist der Kühlblock 17 vorgesehen. Ein Ventilator 18 dient dazu, den Kühlblock 17 mit Frischluft zu versorgen. Der Kühlblock 17 kann beispielsweise mit Kühlrippen ausgeführt sein.

Die Heatpipe 10 erstreckt sich vom Prozessraum 3 bis in ein Gehäuse 31 des Taupunktsensors 1. In dem Gehäuse 31 ist das Peltierelement 16, der Kühlblock 17 und der Ventilator 18 angeordnet. Der Bereich zwischen dem Prozessraum 3 und dem Gehäuse 31 kann als Fühlerschaft 42 bezeichnet werden. Der Fühlerschaft 42 selbst weist eine Isolierung 48 auf, die bis in die Wandung 4 des Prozessraums 3 fortgesetzt sein kann. Sie dient dazu, dass der Heatpipe 10 im Bereich des Fühlerschafts 42 keine Energie zugeführt oder von der Heatpipe 10 abgegeben werden kann.

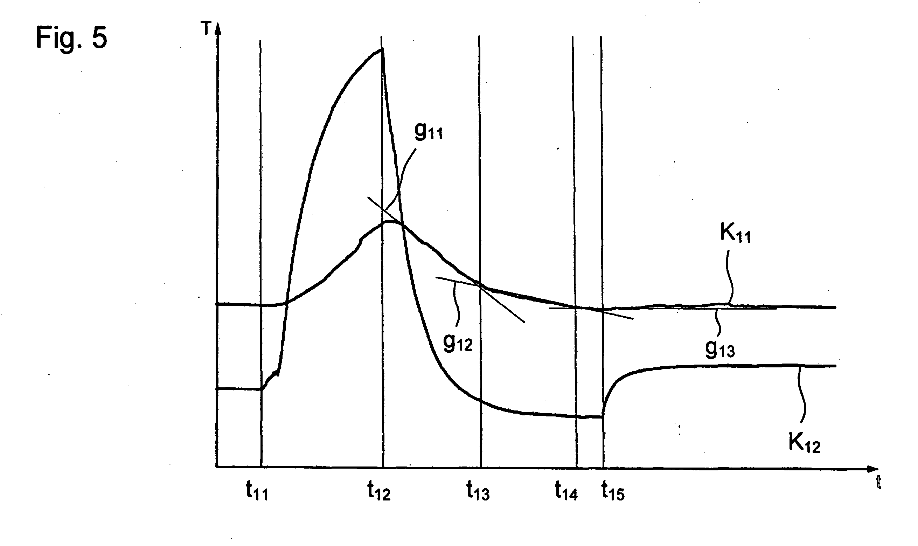

In dem Gehäuse 31 ist eine Steuer- und Auswerteeinrichtung 30 angeordnet. Mit der Steuer- und Auswerteeinrichtung 30 ist der erste Temperatursensor 21, welcher sich im Prozessraum 3 im Bereich der Spitze der Heatpipe 10 befindet, verbunden. Ebenso ist der zweite Temperatursensor 22, welcher zwischen dem Peltierelement 16 und dem hinteren Ende der Heatpipe 10 angeordnet ist, mit der Steuer- und Auswerteeinrichtung 30 verbunden. Des Weiteren ist es der Steuer- und Auswerteeinrichtung 30 möglich, den Ventilator 18 sowie das Peltierelement 16 zu steuern. In der Steuer- und Auswerteeinrichtung 30 findet die Auswertung der Daten der beiden Temperatursensoren 21, 22 sowie die Regelung des Ventilators 18 und des Peltierelements 16 statt. Die Auswertung der von den Temperatursensoren 21, 22 ermittelten Daten sowie die Regelung des Peltierelements 16 werden nachfolgend in Bezug auf Fig. 5 beschrieben.

Der Taupunktsensor 1 kann zusätzlich mit einem Display, einer Tastatur, einer Schnittstelle sowie Digital- und Analogausgängen wie Grenzwertgeberkontakten oder Teilen davon ausgestattet sein. Der Übersicht halber sind diese zusätzlichen Ausstattungen in den Figuren nicht dargestellt.

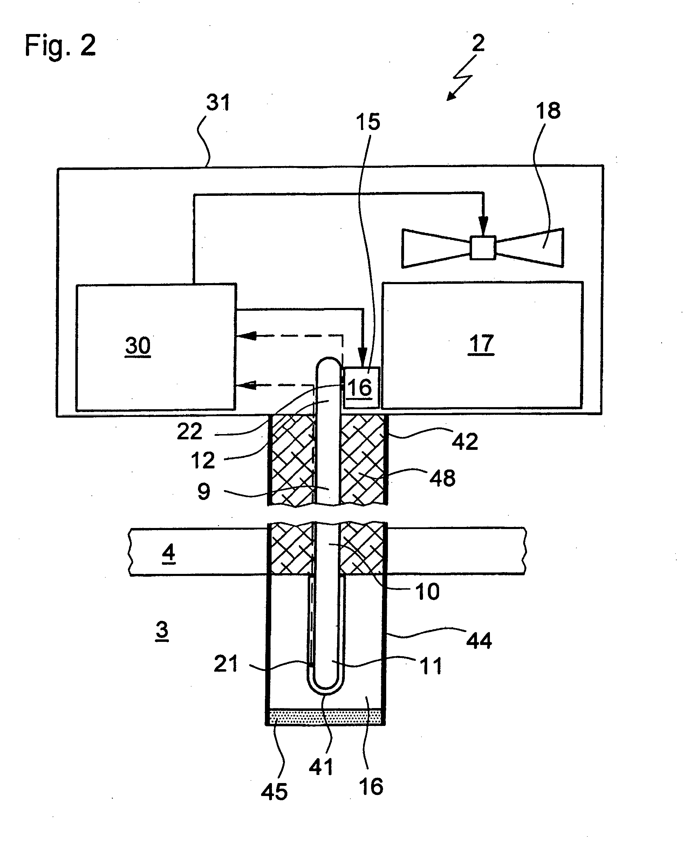

In Fig. 2 ist eine weitere Ausführung des erfindungsgemäßen Taupunktsensors 2 dargestellt. Dieser ist analog zu dem in Fig. 1 beschriebenen Taupunktsensor 1 aufgebaut. Jedoch ist zusätzlich ein Schutzrohr 44 vorgesehen, welches an seinem offenen Ende 46 einen Filter 45 aufweist. Das andere Ende ist mit der Wandung 4 abgeschlossen. Das Schutzrohr 44 mit dem Filter 45 dient dazu, um Psychrometrieeffekte zu verhindern beziehungsweise zu minimieren. Durch Zirkulieren der Luft- beziehungsweise des Gases in dem Prozessraum 3 kann es zu einer zusätzlichen Kühlung der Heatpipe 10 kommen. Ebenfalls kann der Kondensationsprozess hierdurch beeinflusst werden. Durch das Schutzrohr 44 befindet sich die Heatpipe 10 mit dem Überrohr 41 in einem von der Strömung her beruhigten Bereich, so dass die zuvor beschriebenen Effekte reduziert werden können. Hierdurch wird eine zuverlässigere Messung des Taupunktes ermöglicht.

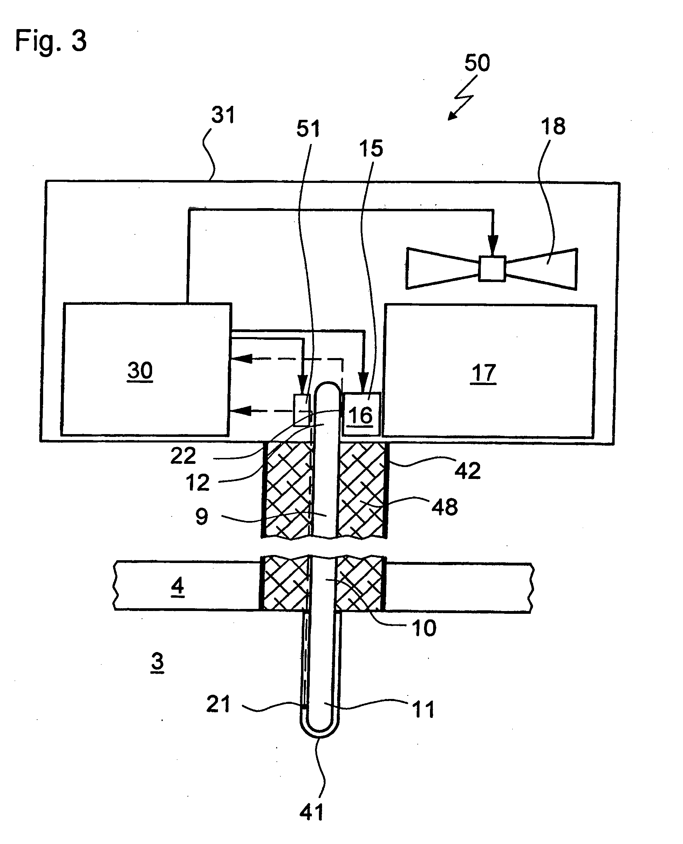

In Fig. 3 ist eine weitere Ausführungsform eines erfindungsgemäßen Taupunktsensors 50 dargestellt. Dieser Taupunktsensor 50 ist im Wesentlichen analog zu dem in Fig. 2 dargestellten Taupunktsensor 2 aufgebaut. Er weist ebenso wie der Taupunktsensor 2 ein Schutzrohr 44 mit einem Filter 45 auf. Im Unterschied zu den beiden zuvor beschriebenen Taupunktsensoren 1 und 2 ist bei dem Taupunktsensor 50 zusätzlich zum Peltierelement 16 eine Widerstandsheizung 51 vorgesehen. Das Peltierelement 16 hat einen relativ geringen Wirkungsgrad und benötigt daher relativ viel Energie, um die Heatpipe 10 zu erwärmen. Daher ist die Widerstandsheizung 51 vorgesehen, um so den Taupunktsensor 50 energieeffizienter auszuführen. Das Peltierelement 16 wird weiterhin zum Abkühlen der Heatpipe 10 verwendet. Bei einer derartigen Ausführungsform sollte der zweite Temperatursensor 22 möglichst in thermischem Kontakt mit der Heatpipe 10, dem Peltierelement 16 und der Wider-standsheizung 51 angebracht sein. Dies ist aber nicht zwingend notwendig.

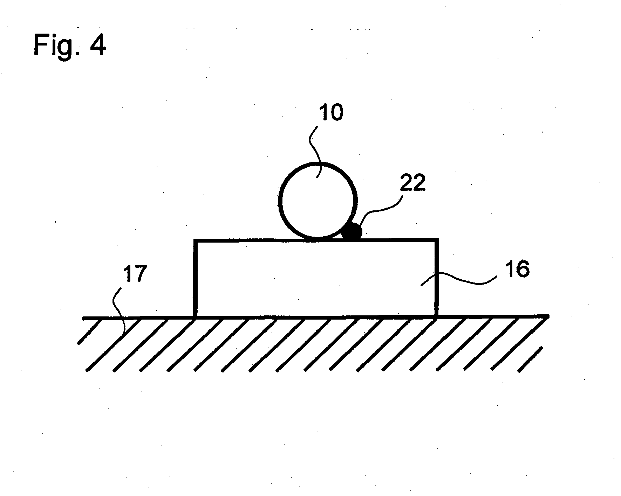

Im Folgenden wird die Positionierung des zweiten Temperatursensors 22 in Verbindung mit Fig. 4 näher erläutert. In Fig. 4 ist eine Frontansicht auf einen zweiten Abschnitt eines erfindungsgemäßen Taupunktsensors 1, 2 dargestellt. An dem Kühlblock 17, der eine Wärmesenke darstellt, ist das Peltierelement 16 angebracht. Auf dem Peltierelement 16 ist wiederum die Heatpipe 10 vorgesehen. In der hier dargestellten Ausführungsform befindet sich der zweite Temperatursensor 22 im Bereich neben der Heatpipe 10, auf dem Pelltierelement 16. Wesentlich ist hierbei, dass er in thermischem Kontakt mit sowohl der Heatpipe 10 als auch dem Peltierelement 16 steht. Dies kann beispielsweise mit einer Positionierung, wie in Fig. 4 dargestellt, gleich neben der Heatpipe 10 erfolgen. Es ist aber ebenso möglich, den Temperatur-sensor 22 zwischen dem Peltierelement 16 und der Heatpipe 10 vorzusehen. In diesem Fall kann für eine bessere thermische Übertragung ein wärmeleitfähiger Stoff, beispielsweise eine Wärmepaste oder ein wärmeleitender Kleber, zwischen der Heatpipe 10 und dem Peltierelement 16 vorgesehen sein, so dass ein, bevorzugt guter, thermischer Kontakt vorhanden ist.

In Fig. 5 ist ein Diagramm über den Temperaturverlauf der von den beiden Temperatursensoren 21, 22 ermittelten Temperaturen dargestellt. Hierbei ist auf der Abszisse die Zeit und auf der Ordinate die ermittelten Temperaturen angezeichnet. Die Kurve K₁₁ stellt die von dem Sensor 21, welcher sich an der Spitze der Heatpipe 10 im Prozessraum 3 befindet, ermittelten Temperaturen dar. Die Kurve K₁₂ wiederum stellt die von dem Temperatursensor 22 ermittelten Temperaturen dar. Der Sensor 22 befindet sich zwischen Heatpipe 10 und Peltierelement 16.

Zum Zeitpunkt t₁₁ wird mit dem Erhitzen der Heatpipe 10 über das Peltierelement 16 begonnen. Zum Zeitpunkt t₁₂ wird der Erhitzungsvorgang abgebrochen. Bei einem zu erwartenden Taupunkt von ca. 60°C wird die Heatpipe 10 am Peltierelement 16 beispielsweise auf eine Temperatur von maximal ca. 125°C erwärmt. Wie in dem Diagramm dargestellt, folgt das im Prozessraum 3 befindliche Ende der Heatpipe 10 dem Anstieg der Temperatur in der Heatpipe 10 verzögert. Auch erreicht das im Prozessraum 3 angeordnete Ende der Heatpipe 10 nicht die am Peltierelement 16 anliegende Temperatur. Das Erhitzen der Heatpipe 10 dient zum einen dazu, um bereits auf der Heatpipe 10 liegendes Kondensat zu verdampfen. Zum anderen wird in dem hier beschriebenen Verfahren maßgeblich der Verlauf der Temperaturen beim Abkühlen bewertet.

Ab Zeitpunkt t₁₂ wird die Heatpipe 10 über das Peltierelement 16 aktiv gekühlt. Hier-durch erfolgt auch eine Temperaturabnahme an der Spitze der Heatpipe 10 im Prozessraum 3. Zum Zeitpunkt t₁₃, zu dem das Peltierelement 16 weiterhin die Heatpipe 10 kühlt, findet eine Änderung des Steigungsgradienten des Verlaufes der Kurve K₁₁ der Temperatur statt. Während des ersten Abkühlvorgangs entspricht die Steigung im Wesentlichen der Gerade g₁₁. Ab dem Zeitpunkt t₁₃ bis zum Zeitpunkt t₁₄ ändert sich der Gradient und entspricht im Wesentlichen der Gerade g₁₂. Nach dem Zeitpunkt t₁₄, zu dem das Peltierelement 16 immer noch kühlt, ändert sich die Steigung der Kurve K₁₁ und entspricht im Wesentlichen der Geraden g₁₃.

Ab dem Zeitpunkt t₁₅ wird das Peltierelement 16 derart angesteuert, dass nur noch ein geringer Temperaturunterschied von ca. 15°C zwischen dem Ende der Heatpipe 10, an dem das Peltierelement 16 angeordnet ist, und der Spitze, welche sich im Prozessraum 3 befindet, vorliegt.

Aus den unterschiedlichen Steigungen der Geraden g₁₁, g₁₂, g₁₃ können Rückschlüsse über die Taupunkttemperatur getätigt werden. So beginnt ab dem Zeitpunkt t₁₃ die Betauung der Heatpipe 10, welche ab dem Zeitpunkt t₁₄ abgeschlossen ist. Durch das Anheben der Temperatur der Heatpipe 10 auf einen maximalen Abstand von 15°C zu dem ermittelten Taupunkt, stellt sich eine konstante Temperatur an der im Prozessraum 3 liegenden Spitze der Heatpipe 10 ein. Dieser Verlauf ab t₁₅ wird auch als Kondensationsplateau bezeichnet.

Würde zum Zeitpunkt t₁₅ nicht mit einer erneuten Erwärmung der Heatpipe 10 begonnen werden, so könnte es zu einer weiteren Abkühlung und einer Übersättigung des Bereiches der Heatpipe 10 kommen, der sich innerhalb des Prozessraums 3 befindet. Übersättigung bedeutet hierbei, dass sehr viel Kondensat auf der Heatpipe 10 abgelagert wird, und somit die gemessene Temperatur verfälscht wird.

Anschließend an den in Fig. 5 gezeigten Verlauf kann erneut mit einem Aufheizen der Heatpipe 10 begonnen werden. Hierbei ist es allerdings nicht notwendig, die Heatpipe 10 derart stark zu erwärmen, wie es beim ersten Erwärmen durchgeführt wurde. Dieser Vorgang des erneuten Erwärmens und des erneuten Bestimmens des Taupunktes kann zyklisch und/oder regelmäßig erneut begonnen werden.

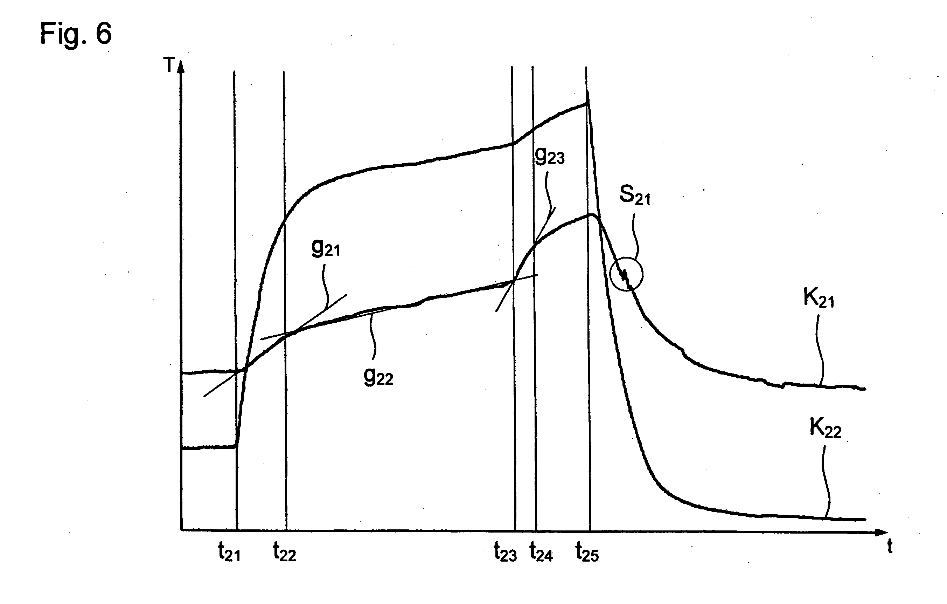

In Fig. 6 ist ein zweites Diagramm über den Temperaturverlauf der von den beiden Temperatursensoren 21, 22 gemessenen Temperaturen dargestellt. Hierbei stellt die Kurve K₂₁ die durch den Temperatursensor 21 gemessene Temperatur und die Kurve K₂₂ die durch den Temperatursensor 22 ermittelte Temperatur dar.

Das Diagramm verdeutlicht, dass auch beim Aufheizen der Taupunkt ermittelt werden kann, beziehungsweise dass während des Aufheizens festgestellt werden kann, wann der Bereich der Heatpipe 10, welcher sich im Prozessraum 3 befindet, trockengelegt ist.

Zum Zeitpunkt t₂₁ wird mit dem Erwärmen der Heatpipe 10 durch das Peltierelement 16 begonnen. Das Peltierelement 16 wird mit einer konstanten Leistung bis zum Punkt t₂₅ betrieben. Zwischen den Zeitpunkten t₂₁ und t₂₂ weist die Kurve K₂₁ der Temperatur, welche durch den ersten Temperatursensor 21 gemessen wird, eine stärkere Steigung beziehungsweise einen stärkeren Gradienten auf, als vom Zeitpunkt t₂₂ bis t₂₃. Dies ist durch die Geraden g₂₁ und g₂₂ verdeutlicht. Anschließend im Bereich zwischen den Zeitpunkten t₂₃ und t₂₄ erhöht sich der Gradient der Kurve K₂₁ erneut. Dies ist durch Gerade g₂₃ verdeutlicht. Ab Zeitpunkt t₂₅ wird das Erwärmen der Heatpipe 10 beendet und die Heatpipe 10 aktiv durch das Peltierelement 16 gekühlt. Durch die Änderung des Gradienten der Gerade g₂₁ zu dem Gradienten der Geraden g₂₂ kann erkannt werden, dass ab Zeitpunkt t₂₂ sich die Temperatur im Taupunktbereich befindet.

Wiederum durch die Änderung des Gradienten der Gerade g₂₂ zu dem Gradienten der Gerade g₂₃ wird erkannt, dass das Kondensat ausgeheizt ist. Dies bedeutet, dass der Teil der Heatpipe 10, welcher sich im Prozessraum 3 befindet, derart aufgeheizt ist, dass kein Kondensat mehr auf ihm vorhanden ist. Zusätzlich ist in der Kurve K₂₁ eine Unstetigkeit S₂₁ dargestellt. Diese kann ebenfalls zum Ermitteln des Taupunktes herangezogen werden. Sie tritt beim Abkühlen der Heatpipe 10 dann auf, wenn die Taupunkttemperatur erreicht wird.

Neben dem Erkennen, wann die Heatpipe 10 trockengelegt ist, dient die Analyse des Erwärmvorgangs auch dazu, den Taupunkt schon während des ersten Erwärmens der Heatpipe 10 ungefähr zu bestimmen, so dass beim ersten Abkühlen bereits genauere Prozessparameter eingestellt werden können und so eine erste Messung relativ genau erfolgen kann.

Die beiden Diagramme aus den Figuren 5 und 6 stellen das erfindungsgemäße Verfahren mit jeweils unterschiedlichen Rahmenbedingungen dar. So liegt der Taupunkt in Fig. 5 bei ca. 60°C wohingegen der Taupunkt in Fig. 6 bei ca. 75°C liegt. Auch ist die zeitliche Auflösung der beiden Diagramme unterschiedlich.

Mit der erfindungsgemäßen Vorrichtung und dem erfindungsgemäßen Verfahren zum Bestimmen des Taupunktes eines Gases in einem Prozessraum kann die Taupunkttemperatur effizient und zuverlässig bestimmt werden.

## Patentansprüche

1. Vorrichtung (1) zum Bestimmen des Taupunktes eines Gases in einem Prozessraum (3),
mit einem thermisch hochleitfähigen Körper (9), insbesondere einem Wärmerohr (10),
wobei ein erster Abschnitt (11) des thermisch hochleitfähigen Körpers (9) im Prozessraum (3) und
ein zweiter Abschnitt (12) des thermisch hochleitfähigen Körpers (9) außerhalb des Prozessraumes (3) vorsehbar ist,
wobei im Bereich des zweiten Abschnitts (12) des thermisch hochleitfähigen Körpers (9) eine Einrichtung zum aktiven Temperieren (15) in wärmeleitendem Kontakt mit dem thermisch hochleitfähigen Körper (9) vorgesehen ist,
wobei im Bereich des ersten Abschnitts (11) des thermisch hochleitfähigen Körpers (9) ein erster Temperatursensor (21) zum Messen der Temperatur des thermisch hochleitfähigen Körpers (9) vorgesehen ist und
wobei im Bereich des zweiten Abschnitts (12) des thermisch hochleitfähigen Körpers (9) ein zweiter Temperatursensor (22) zum Messen der Temperatur des thermisch hochleitfähigen Körpers (9) vorgesehen ist,
**dadurch gekennzeichnet, dass** die Einrichtung zum aktiven Temperieren (15) zum aktiven Erwärmen und zum aktiven Abkühlen des thermisch hochleitfähigen Körpers (9) ausgelegt ist, und dass eine Steuer- und Auswerteeinrichtung (30) zum Vergleichen der Temperaturverläufe der durch den ersten (11) und den zweiten Temperatursensor (12) gemessenen Temperaturen und zum Bestimmen der Taupunkttemperatur anhand von Unstetigkeiten in einem der Verläufe vorgesehen ist.

2. Vorrichtung nach Anspruch 1,
**dadurch gekennzeichnet, dass** der zweite Temperatursensor (22) im Bereich zwischen und/oder in thermischem Kontakt mit der Einrichtung zum aktiven Temperieren (15) und dem thermisch hochleitfähigen Körper (9) angeordnet ist.

3. Vorrichtung nach Anspruch 1 oder 2,
**dadurch gekennzeichnet, dass** eine Steuer- und Auswerteeinrichtung (30) zum Vergleichen der Temperaturverläufe der durch den ersten (11) und den zweiten Temperatursensor (12) gemessenen Temperaturen und zum Bestimmen der Taupunkttemperatur anhand von Unstetigkeiten in beiden Verläufen vorgesehen ist.

4. Vorrichtung nach einem der Ansprüche 1 bis 3,
**dadurch gekennzeichnet, dass** die Steuer- und Auswerteinrichtung (30) zum zyklischen und/oder regelmäßigen Erwärmen und Abkühlen des thermisch hochleitfähigen Körpers (9) ausgebildet ist.

5. Vorrichtung nach einem der Ansprüche 1 bis 4,
**dadurch gekennzeichnet, dass** die Einrichtungen zum aktiven Temperieren (15) als Peltierelement (16) ausgeführt sind.

6. Vorrichtung nach einem der Ansprüche 1 bis 5,
**dadurch gekennzeichnet, dass** die Einrichtungen zum aktiven Temperieren (15) einen Kühlkörper (17) aufweisen.

7. Vorrichtung nach einem der Ansprüche 1 bis 6,
**dadurch gekennzeichnet, dass** zumindest im Teilbereich des ersten Abschnitts (11) des thermisch hochleitfähigen Körpers (9) ein Überrohr (41) vorgesehen ist, und dass der erste Temperatursensor (11) zwischen dem Überrohr (41) und dem thermisch hochleitfähigen Körper (9) vorgesehen ist.

8. Vorrichtung nach einem der Ansprüche 1 bis 7,
**dadurch gekennzeichnet, dass** im Prozessraum (3) um den thermisch hochleitfähigen Körper (9) oder um den thermisch hochleitfähigen Körper (9) mit Überrohr (41) ein Schutzrohr (44) vorgesehen ist, und dass das Schutzrohr (44) an einem offenen Ende (46) einen Filter (45) aufweist.

9. Vorrichtung nach einem der Ansprüche 1 bis 8,
**dadurch gekennzeichnet, dass** der thermisch hochleitfähige Körper (9) durch eine Wandung (4), welche den Prozessraum (3) begrenzt, hindurch ragend vorgesehen ist.

10. Verfahren zum Bestimmen des Taupunktes eines Gases in einem Prozessraum (3), insbesondere mit einer Vorrichtung (1) nach einem der Ansprüche 1 bis 9,
wobei mittels einer Einrichtung zum aktiven Temperieren (15) ein sich durch eine Wandung (4), welche den Prozessraum (3) begrenzt, erstreckender thermisch hochleitfähiger Körper (9), insbesondere einem Wärmerohr (10), zum Bestimmen des Taupunktes gezielt erwärmt und abgekühlt wird, wobei über einen ersten Temperatursensor (21) eine erste Temperatur des thermisch hochleitfähigen Körpers (9) im Prozessraum (3) ermittelt wird, wobei über einen zweiten Temperatursensor (22) eine zweite Temperatur des thermisch hochleitfähigen Körpers (9) im Bereich der Einrichtung zur aktiven Temperierung ermittelt wird, dass in einem Schritt A während des Abkühlens Unstetigkeiten im Temperaturverlauf der durch den ersten (21) und/oder den zweiten Temperatursensor (22) ermittelten Temperaturen zum Bestimmen der Taupunkttemperatur ausgewählt werden, und dass in einem Schritt B der thermisch hochleitfähige Körper (9) über die zu erwartende Taupunkttemperatur erwärmt wird.

11. Verfahren nach Anspruch 10,
**dadurch gekennzeichnet, dass** in einem Schritt C nach dem Bestimmen der Taupunkttemperatur die Einrichtung zum aktiven Temperieren (15) geregelt wird, um beim zweiten Temperatursensor (22) eine Temperatur zu erhalten, welche sich im Temperaturbereich des Taupunktes, insbesondere Taupunkt ± 15°C, befindet.

12. Verfahren nach Anspruch 10 oder 11,
**dadurch gekennzeichnet, dass** zyklisch oder bei Bedarf die Schritte B, A, C in dieser Reihenfolge erneut ausgeführt werden.

13. Verfahren nach einem der Ansprüche 10 bis 12,
**dadurch gekennzeichnet, dass** bei einem erneuten Ausführen des Schrittes B der thermisch hochleitfähige Körper (9) geringer erwärmt wird als beim erstmaligen Ausführen des Schrittes B, dass ein Trockenlegen des thermisch hochleitfähigen Körpers (9) im Prozessraum (3) durch Unstetigkeiten im Temperaturverlauf der durch den ersten (21) und/oder den zweiten Temperatursensor (22) ermittelten Temperaturen festgestellt wird, und dass nach dem Feststellen des Trockenlegens des thermisch hochleitfähigen Körpers (9) das Erwärmen beendet wird.

## Claims

1. A device (1) for determining the dew point of a gas in a process chamber (3),
with a thermally highly conductive body (9), in particular a heat exchanger tube (10),
wherein a first section (11) of the thermally highly conductive body (9) can be provided in the process chamber (3) and
a second section (12) of the thermally highly conductive body (9) can be provided outside the process chamber (3),
wherein a device for active temperature regulation (15) in heat-conducting contact with the thermally highly conductive body (9) is provided in the region of the second section (12) of the thermally highly conductive body (9),
wherein a first temperature sensor (21) for measuring the temperature of the thermally highly conductive body (9) is provided in the region of the first section (11) of the thermally highly conductive body (9),
and
wherein a second temperature sensor (22) for measuring the temperature of the thermally highly conductive body (9) is provided in the region of the second section (12) of the thermally highly conductive body (9),
**characterised in that** the device for active temperature regulation (15) is designed for the active heating and for the active cooling of the thermally highly conductive body (9), and that a control and evaluation device (30) is provided for comparing the temperature profiles of the temperatures measured by the first (11) and the second temperature sensor (12) and for determining the dew point temperature on the basis of discontinuities in one of the profiles.

2. The device according to claim 1,
**characterised in that** the second temperature sensor (22) is disposed in the region between and/or in thermal contact with the device for active temperature regulation (15) and the thermally highly conductive body (9).

3. The device according to claim 1 or 2,
**characterised in that** the control and evaluation device (30) is provided for comparing the temperature profiles of the temperatures measured by the first (11) and the second temperature sensor (12) and for determining the dew point temperature on the basis of discontinuities in the two profiles.

4. The device according to any one of claims 1 to 3,
**characterised in that** the control and evaluation device (30) is designed for the cyclical and/or regular heating and cooling of the thermally highly conductive body (9).

5. The device according to any one of claims 1 to 4,
**characterised in that** the devices are designed for active temperature regulation (15) as a Peltier element (16).

6. The device according to any one of claims 1 to 5,
**characterised in that** the devices for active temperature regulation (15) comprise a cooling body (17).

7. The device according to any one of claims 1 to 6,
**characterised in that** an outer tube (41) is provided at least in the partial region of the first section (11) of the thermally highly conductive body (9), and that the first temperature sensor (11) is provided between the outer tube (41) and the thermally highly conductive body (9).

8. The device according to any one of claims 1 to 7,
**characterised in that** a protective tube (44) is provided in the process chamber (3) around the thermally highly conductive body (9) or around the thermally highly conductive body (9) with the outer tube (41), and that the protective tube (44) comprises a filter (45) at an open end (46).

9. The device according to any one of claims 1 to 8,
**characterised in that** the thermally highly conductive body (9) is provided projecting through a wall (4) which limits the process chamber (3).

10. A method for determining the dew point of a gas in a process chamber (3), in particular with a device (1) according to any one of claims 1 to 9,
wherein, by means of a device for active temperature regulation (15), a thermally highly conductive body (9), in particular a heat exchanger tube (10), extending through a wall (4) which limits the process chamber (3) is heated and cooled in a targeted manner in order to determine the dew point, wherein a first temperature of the thermally highly conductive body (9) in the process chamber (3) is ascertained by means of a first temperature sensor (21), and wherein a second temperature of the thermally highly conductive body (9) in the region of the device for active temperature regulation is ascertained by means of a second temperature sensor (22), that discontinuities in the temperature profile of the temperatures ascertained by the first (21) and/or the second temperature sensor (22) are selected in a step A during the cooling in order to determine the dew point temperature, and that in a step B the thermally highly conductive body (9) is heated above the dew point temperature to be expected.

11. The method according to claim 10,
**characterised in that**, in a step C after the determination of the dew point temperature, the device for active temperature regulation (15) is regulated in order to obtain a temperature at the second temperature sensor (22) that lies in the temperature range of the dew point, in particular the dew point ± 15 °C.

12. The method according to claim 10 or 11,
**characterised in that** steps B, A, C are again performed in this order cyclicality or as required.

13. The method according to any one of claims 10 to 12,
**characterised in that**, when step B is performed again, the thermally highly conductive body (9) is heated less than when step B is performed for the first time, that a drainage of the thermally highly conductive body (9) in the process chamber (3) is ascertained by discontinuities in the temperature profile of the temperatures ascertained by the first (21) and/or the second temperature sensor (22), and that the heating is terminated after the drainage of the thermally highly conductive body (9) is ascertained.

## Revendications

1. Dispositif (1) pour déterminer le point de rosée d'un gaz dans un espace de traitement (3)
avec un corps (9) thermoconducteur, en particulier un tube échangeur de chaleur (10),
dans lequel peut être prévue une première section (11) du corps hautement thermoconducteur (9) dans l'espace de traitement (3) et
une deuxième section (12) du corps hautement thermoconducteur (9) en dehors de l'espace de traitement (3),
dans lequel un système destiné à un équilibrage actif de la température (15) en contact thermoconducteur avec le corps hautement thermoconducteur (9) est prévu dans la zone de la deuxième section (12) du corps hautement thermoconducteur (9),
dans lequel un premier capteur de température (21) pour mesurer la température du corps hautement thermoconducteur (9) est prévu dans la zone de la première section (11) du corps hautement thermoconducteur (9)
et
dans lequel un deuxième capteur de température (22) pour mesurer la température du corps hautement thermoconducteur (9) est prévu dans la zone de la deuxième section (12) du corps hautement thermoconducteur (9)
**caractérisé en ce que** le système destiné à un équilibrage actif de la température (15) est conçu pour un chauffage actif et un refroidissement actif du corps hautement thermoconducteur (9) et **en ce qu'**est prévu un système de pilotage et d'évaluation (30) destiné à comparer les profils de température des températures mesurées par le premier (11) et le deuxième capteur de température (12) et destiné à déterminer la température du point de rosée à l'aide des discontinuités dans un des profils.

2. Dispositif selon la revendication 1,
**caractérisé en ce que** le deuxième capteur de température (22) est disposé dans la zone située entre et/ou en contact thermique avec le système destiné à l'équilibrage actif de température (15) et le corps hautement thermoconducteur (9).

3. Dispositif selon la revendication 1 ou 2,
**caractérisé en ce qu'**est prévu un système de pilotage et d'évaluation (30) destiné à comparer les profils de température mesurées par le premier (11) et le deuxième capteur de température (12) et destiné à déterminer la température du point de rosée à l'aide des discontinuités dans un des profils.

4. Dispositif selon l'une quelconque des revendications 1 à 3,
**caractérisé en ce que** le système de pilotage et d'évaluation (30) est conçu pour le chauffage et le refroidissement cycliques et/ou réguliers du corps hautement thermoconducteur (9).

5. Dispositif selon l'une quelconque des revendications 1 à 4,
**caractérisé en ce que** les systèmes destinés à l'équilibrage actif de température (15) sont réalisés comme un élément Peltier (16).

6. Dispositif selon l'une quelconque des revendications 1 à 5,
**caractérisé en ce que** les systèmes destinés à l'équilibrage actif de température (15) comportent un corps de refroidissement (17).

7. Dispositif selon l'une quelconque des revendications 1 à 6,
**caractérisé en ce qu'**au moins dans le secteur partiel de la première section (11) du corps hautement thermoconducteur (9) est prévu un tube supérieur (41) et **en ce que** le premier capteur de température (11) est prévu entre le tube supérieur (41) et le corps hautement thermoconducteur (9).

8. Dispositif selon l'une quelconque des revendications 1 à 7,
**caractérisé en ce que** dans l'espace de traitement (3) un tube de protection (44) est prévu autour du corps hautement thermoconducteur (9) ou autour du corps hautement thermoconducteur (9) avec un tube supérieur (41) et **en ce que** le tube de protection (44) comporte un filtre (45) à une extrémité ouverte (46).

9. Dispositif selon l'une quelconque des revendications 1 à 8,
**caractérisé en ce que** le corps hautement thermoconducteur (9) est prévu, passant à travers une paroi (4) laquelle limite l'espace de traitement (3).

10. Procédé destiné à déterminer le point de rosée d'un gaz dans un espace de traitement (3), en particulier avec un dispositif (1) selon l'une quelconque des revendications 1 à 9,
dans lequel au moyen d'un système destiné à l'équilibrage actif de température (15) un corps hautement thermoconducteur (9) s'étendant à travers une paroi (4) limitant l'espace de traitement (3), en particulier un tube échangeur de chaleur (10), destiné à déterminer le point de rosée, est chauffé et refroidi de manière précise, dans lequel une première température du corps hautement thermoconducteur (9) est déterminée dans l'espace de traitement (3) par un premier capteur de température (21), dans lequel une deuxième température du corps hautement thermoconducteur (9) est déterminée dans la zone du système destiné à l'quilibrage actif de température par un deuxième capteur de température (22), en ce que dans une phase A pendant le refroidissement des discontinuités du profil de température des températures déterminées par le premier (21) et/ou le deuxième capteur de température (22) sont sélectionnées pour définir la température du point de rosée et en ce que dans une phase B le corps hautement thermoconducteur (9) est réchauffé au-dessus de la température du point de rosée à attendre.

11. Procédé selon la revendication 10,
**caractérisé en ce que** dans une phase C après détermination de la température du point de rosée, le système destiné à l'équilibrage actif de température (15) est réglé pour obtenir au deuxième capteur de température (22) une température qui se situe dans la gamme de températures du point de rosée, en particulier du point de rosée ± 15 °C.

12. Procédé selon la revendication 10 ou 11,
**caractérisé en ce que** les phases B, A, C sont à nouveau exécutées dans cet ordre de façon cyclique ou en cas de besoin.

13. Procédé selon l'une quelconque des revendications 10 à 12,
**caractérisé en ce qu'**en cas d'exécution renouvelée de la phase B, le corps hautement thermoconducteur (9) est plus faiblement chauffé que lors de la première exécution de la phase B, **en ce qu'**un assèchement du corps hautement thermoconducteur (9) est constaté dans l'espace de traitement (3) par des discontinuités du profil de température des températures déterminées par le premier (21) et/ou le deuxième capteur de température (22) et **en ce que** le réchauffement est terminé après constatation de l'assèchement du corps hautement thermoconducteur (9).
